# EUROPÄISCHE PATENTANMELDUNG

(11) **EP 2 671 706 A1**
(43) Veröffentlichungstag der Anmeldung: **11.12.2013**
(21) Anmeldenummer: 12170721.0
(22) Anmeldetag: 04.06.2012
(51) Int. Cl.: B29C 67/00

(54) **Verfahren zum Aufbau eines Formkörpers**

(71) Anmelder: Ivoclar Vivadent AG, 9494 Schaan (LI); Technische Universität Wien, 1040 Wien (AT)
(72) Erfinder: Ebert, Jörg, 9470 Buchs (CH); Wachter, Wolfgang, 9494 Schaan (LI); Rohner, Gottfired, 9450 Altstätten (CH); Stampfl, Jürgen, 1050 Wien (AT)
(74) Vertreter: UEXKÜLL & STOLBERG

(57) **Zusammenfassung**

Verfahren zum Aufbau eines Formkörpers aus photopolymerisierbaren Material unter Anwendung einer lithographiebasierten generativen Fertigung (Rapid Prototyping), bei dem an einer Bauplattform (1, 2, 3, 4) eine Schicht aus flüssigem, photopolymerisierbarem Material definiert wird, die Schicht in einem Belichtungsgebiet mit vorgegebener Kontur durch Belichten polymerisiert wird, an der polymerisierten Schicht einer weitere Schicht aus photopolymerisierbaren Material definiert wird, die zuletzt definierte Schicht in einem Belichtungsgebiet mit für die zuletzt definierte Schicht vorgegebener Kontur durch Belichten polymerisiert wird, und die letzten beiden Schritte wiederholt werden, bis durch die Abfolge von ausgehärteten Schichten mit schichtweise vorgegebenen Konturen ein Formkörper mit vorgegebener Form gebildet ist, wobei auf mindestens eine Schicht Farbe innerhalb der vorgegebenen Kontur aufgebracht wird.

## Beschreibung

Die Erfindung betrifft ein Verfahren zum Aufbau eines Formkörpers aus flüssigem, photopolymerisierbarem Material unter Anwendung einer lithographiebasierten generativen Fertigung (Rapid Prototyping), bei dem an einer Bauplattform eine Schicht aus viskosem, flüssigen Material definiert wird, die Schicht in einem Belichtungsgebiet mit vorgegebener Kontur durch Belichten polymerisiert wird, an der polymerisierten Schicht eine weitere Schicht aus photopolymerisierbarem Material definiert wird, die zuletzt definierte Schicht in einem Belichtungsgebiet mit für die zuletzt definierte Schicht vorgegebener Kontur durch Belichten polymerisiert wird, und die letzten beiden Schritte wiederholt werden, bis durch die Abfolge von ausgehärteten Schichten mit schichtweise vorgegebenen Konturen ein Formkörper mit vorgegebener Form gebildet ist.

Ein derartiges Verfahren ist zum Beispiel aus WO 2010/045950 A1 bekannt, die sich insbesondere auf den Aufbau von Dentalrestaurationen aus flüssigen, photopolymerisierbaren Materialien, die hohe Viskosität aufweisen können. Bei dem bekannten Verfahren wird eine Bauplattform vertikal beweglich über einem Wannenboden gehalten, der lichtdurchlässig ausgebildet ist. Unterhalb des Wannenbodens befindet sich eine Belichtungseinheit. Die Bauplattform wird zunächst in das photopolymerisierbare Material soweit abgesenkt, bis zwischen der Bauplattform und dem Wannenboden nur noch eine Schicht mit der gewünschten Schichtdicke aus photopolymerisierbarem Material verbleibt. Anschließend wird diese Schicht mit einer vorgegebenen Kontur durch die Belichtungseinheit belichtet und dadurch ausgehärtet. Nach Anheben der Bauplattform wird photopolymerisierbares Material aus der Umgebung nachgeführt und die Bauplattform erneut abgesenkt, wobei die Absenkung so gesteuert wird, dass der Abstand zwischen der zuletzt gebildeten Schicht und dem Wannenboden eine Schicht mit der gewünschten Dicke definiert. Danach werden die letzten Schritte so oft wiederholt, bis durch die aufeinanderfolgende Aushärtung von Schichten mit jeweils vorgegebener Kontur ein Formkörper mit der gewünschten Form hergestellt ist.

In DE 698 07 236 T2 wird die Herstellung von Formkörpern beschrieben, wobei pulverförmige Materialien schichtweise aufgebracht und ortsselektiv eine Flüssigkeit als Bindemittel aufgebracht wird. Die Flüssigkeit, die auf jede Schicht aus feinpulverigem Material aufgetragen wird, wird vorzugsweise in Form von einem oder mehreren feinen Tröpfchenstrahlen aufgetragen. Weiter wird erwähnt, dass die Flüssigkeit in Form einer Mehrzahl von feinen Tröpfchenstrahlen aufgetragen wird, wobei die Flüssigkeiten in den verschiedenen Strahlen verschiedene Farben besitzen. Dies kann dadurch bewirkt werden, indem ein an sich bekannter Tintenstrahldrucker verwendet wird. Hier wird also das Bindemittel ortsselektiv gleichzeitig mit der gewünschten Farbe aufgebracht. Ähnliche Verfahren sind in DE 697 16 946 T3 und DE 603 10 600 T2 beschrieben.

Die zuvor beschriebenen Verfahren gehören zu den 3D-Drucktechniken (Pulverbett). Der Eintrag von farbigem Bindemittel in ein Pulverbett führt zwar zu farbigen Bauteilen, deren Eigenschaften sind jedoch in verschiedener Hinsicht unbefriedigend. Bei den 3D-Drucktechniken werden die Granulate entweder eingefärbt und/oder die Pulveroberflächen belegt. In beiden Fällen kommt es durch Kapillarkräfte zu einem unkontrollierten Eindringen und Verlaufen der Farbe, so dass die Einfärbung nicht ortsselektiv bleibt. Eine Einfärbung ist hier also stets mit einem Verlaufen der Farbe aufgrund der Eigenschaften einer losen Pulverschüttung verbunden. Das Endprodukt von 3D-Drucktechniken ist stets ein poröser Grünkörper, welcher beispielsweise unter Verwendung keramischer Partikel nicht zu einem dichten Gefüge mit entsprechenden Eigenschaften gesintert werden kann. Hier bieten sich lediglich zusätzliche Infiltrationsschritte an, die potentiell zu einer weiteren "Verschleppung" der Farbkörper führen können.

Es ist Aufgabe der vorliegenden Erfindung, ein Verfahren zum schichtweisen Aufbau eines Formkörpers aus flüssigem, photopolymerisierbarem Material anzugeben, der mit einer gewünschten ortsabhängigen Einfärbung aufbaubar ist, insbesondere Formkörper, die als Dentalrestaurationen dienen können.

Zur Lösung dieser Aufgabe dient das Verfahren mit den Merkmalen des Patentanspruchs 1. Vorteilhafte Ausführungsformen der Erfindung sind in den Unteransprüchen aufgeführt.

Erfindungsgemäß wird auf eine gebildete Schicht Farbe, vorzugsweise mit der jeweils gewünschten variierenden Farbverteilung über die Schicht, aufgebracht, wobei die gewünschte Farbverteilung erhalten bleibt. Bei drucktechnischer Aufbringung der Farbe bleibt somit die damit realisierbare hohe Ortsauflösung der Farbverteilung erhalten, so dass ein Formkörper einer räumlich genau vorgebbaren Farbverteilung erzeugt werden kann. Die ortselektive Farbaufbringung kann auf jeder gebildeten Schicht erfolgen oder es können dazwischen auch Schichten gebildet werden, auf die keine Farbe aufgebracht wird.

In einer bevorzugten Ausführungsform wird die Farbe auf eine Schicht nach deren Polymerisierung und vor dem Aufbringen einer weiteren Schicht aufgebracht. Vorteile des Bedruckens einer bereits polymerisierten Schicht liegen in der Kontrolle der Tropfenausbreitung und des Benetzungsverhaltens auf der polymerisierten Oberfläche. Nach möglicher Trocknung bzw. Fixierung der aufgebrachten farbgebenden Komponenten wie Farbpigmenten, die dispergiert oder suspendiert sein können, oder Farbstoffen, die gelöst sein können, zusammengefasst im folgenden als Farbe bezeichnet, verbleiben diese beim erneuten Eintauchen in das photopolymerisierbare Material nach ihrer Aushärtung an Ort und Stelle und werden durch Polymerisieren der nächsten Schicht eingebunden.

Alternativ erfolgt die Farbaufbringung auf eine definierte Schicht aus photopolymerisierbarem Material vor deren Aushärtung. Vorzugsweise wird die aufgebrachte Farbschicht, wenn nötig, fixiert, was bei Suspensionen und Lösungen in photopolymerisierbarem Material durch Belichten und bei Suspensionen von Farbpigmenten bzw. Lösung von Farbstoffen in Lösungsmitteln durch Verdampfen des Lösungsmittels erfolgt. Da dieser Fixierungs- oder Aushärtungsschritt vorzugsweise unmittelbar auf den Aufbringungsschritt folgt, bleibt die Farbverteilung ohne merkliche Diffusion oder Ausbreitung der aufgebrachten Farbverteilung erhalten. Auch in dieser Ausführungsform ist es bevorzugt, dass nach der Verfestigung einer Schicht eventuell noch anhaftendes nicht verfestigtes farbgebendes Material in einem geeigneten Reinigungsschritt zu entfernen, z.B. durch Absaugen oder Abblasen.

Die Farbaufbringung kann durch einen Farbdrucker, z.B. einen Tintenstrahldrucker, direkt auf die Schicht erfolgen. Die Farbe kann auch durch Durchlaufen einer Reihe von hintereinander angeordneten Düsen bzw. Druckköpfen mit je mindestens einer Düse aufgebracht werden, wobei den Düsen bzw. Druckköpfen unterschiedliche Farben zugeordnet sind.

Das Aufbringen der Farbe kann alternativ indirekt durch ein Folientransferverfahren erfolgen, bei dem die Farbe zunächst ortsselektiv auf eine Folie aufgebracht und von dort auf die zu färbende Schicht übertragen wird. Die Übertragung kann z.B. durch Adhäsion oder Verwendung einer Farbfixierstation unter Fixierung durch Belichten durch die Folie erfolgen. Vorzugsweise wird das photopolymerisierbare Material an der Unterseite der Bauplattform durch Belichten von unten durch einen durchsichtigen Wannenboden polymerisiert. Die Bauplattform wird relativ zu dem Wannenboden nach jedem Belichtungsschritt angehoben, und es wird polymerisierbares Material zur Definition einer weiteren Schicht nachgeführt. Vorzugsweise wird nach Nachführung des photopolymerisierbaren Materials die Bauplattform, falls vorhanden, mit den daran gebildeten Schichten, wieder in das nachgeführte photopolymerisierbare Material abgesenkt, so dass durch Einstellung des Abstands über dem Wannenboden eine Schicht mit vorgegebener Dicke definiert wird.

Vorzugsweise ist die Bauplattform verfahrbar aufgehängt und wird die Bauplattform nach der Polymerisierung einer Schicht durch Verfahren zu einer Farbaufbringungsstation geführt, in der ortsselektiv Farbe auf die zuletzt gebildete Schicht aufgebracht wird, wonach die Bauplattform wieder zum Definieren einer neuen Schicht aus photopolymerisierbarem Material zurückgefahren wird.

Vorzugsweise ist die Bauplattform verfahrbar aufgehängt, und die Bauplattform wird nach der Polymerisation einer Schicht durch Verfahren zu einer Reinigungsstation überführt, in der überschüssiges polymerisierbares Material, das in dem letzten Belichtungsschritt nicht ausgehärtet worden ist, entfernt wird. Anschließend wird die Bauplattform weiter zu einer Farbaufbringungsstation gefahren, in der ortselektiv Farbe auf die zuletzt gebildete Schicht aufgebracht wird.

Vorzugsweise wird die Bauplattform nach der Farbaufbringung in der Farbaufbringungsstation zu einer Farbfixierstation verfahren, in der die aufgebrachte Farbe durch Verfestigung fixiert wird, bevor die Bauplattform wieder zur Wanne hin verfahren wird, wo eine weitere Schicht aus photopolymerisierbarem Material definiert wird.

Vorzugsweise erfolgt das Verfahren der Bauplattform durch Drehen eines die Bauplattform haltenden Trägers um eine horizontale oder vertikale Drehachse. Es ist natürlich auch möglich, dass das Verfahren der Bauplattform durch lineare Bewegung der Bauplattform entlang der linear hintereinander liegenden Bearbeitungsstationen erfolgt.

Vorzugsweise erfolgt das Verfahren der Bauplattform zwischen zwei Bearbeitungsstationen durch Drehen des die Bauplattform haltenden Trägers um dessen vertikale Drehachse und das Verfahren zwischen zwei anderen Bearbeitungsstationen durch Drehen der Bauplattform um eine zur vertikalen Drehachse des Trägers senkrechte, horizontale Drehachse um 180°, so dass aufeinanderfolgend eine Bearbeitung von unten und von oben erfolgt.

Vorzugsweise wird auf beiden gegenüberliegenden Oberflächen der Bauplattform jeweils ein Formkörper aufgebaut und erfolgt die Bearbeitung der beiden Formkörper von unten und oben gleichzeitig.

Vorzugsweise ist eine weitere Bauplattform drehbar zusammen mit der ersten Bauplattform so aufgehängt, dass sich die weitere Bauplattform in der Reinigungs- oder Farbaufbringungsstation befindet, wenn die erste Bauplattform sich in einer Station zur Definition einer weiteren Schicht befindet.

Vorzugsweise sind mehrere Bauplattformen um die Drehachse verteilt an einem Träger so aufgehängt sind, dass, wenn sich eine erste Bauplattform zur Polymerisation einer weiteren Schicht gegenüber einer Belichtungseinheit befindet, eine zweite Bauplattform sich in der Reinigungsstation befindet, eine dritte Bauplattform sich in der Farbaufbringungsstation befindet und eine vierte Bauplattform sich in der Farbfixierstation befindet.

Vorzugsweise erfolgt die Bearbeitung der vier entstehenden Formkörper an den vier Bauplattformen zeitlich parallel durch Belichtung, durch Reinigung in der Reinigungsstation, durch Farbaufbringung in der Farbaufbringungsstation und durch Farbaushärtung in der Farbfixierstation erfolgt.

Es kann Fälle geben, in denen es nicht immer möglich ist, alle anhaftenden Monomerreste in einer Reinigungsstation berührungslos (z.B. durch Absaugen, Abblasen) zu entfernen. Es ist daher bevorzugt, die farbgebenden Komponenten mit UV-Licht (Spektrum 200 - 410 nm) auszuhärten bzw. zu polymerisieren oder die aufgebrachte Farbe durch Verdampfen von Lösungsmittel zu trocknen, während der eigentliche Bauprozess unter Verwendung von sichtbarem Licht (Spektrum 380 - 780 nm) stattfindet oder umgekehrt. Entsprechende Additive, wie Absorber und Initiatoren sind gemäß dem bevorzugten Wellenlängenspektrum auszuwählen.

Vorzugsweise wird im Bereich von Überhängen, d.h. wenn die aktuell auszuhärtende Schicht an wenigstens einem Randbereich über die letzte zuvor ausgehärtete Schicht vorsteht, der über die zuletzt ausgehärtete Schicht hervorstehende Bereich mittels Energie der Belichtungswellenlänge absorbierendem Material geschützt, so dass es beim Belichten des überstehenden Bereichs eine Polymerisation in dem darunterliegenden Bereich der zuletzt ausgehärteten Schicht vermieden wird.

Es ist bevorzugt, wenn es beim Absenken der Bauplattform mit dem daran bereits anhaftenden Teil des Formkörpers in das photopolymerisierbare Material zur Definition einer weiteren auszuhärtenden Schicht nicht zu einer merklichen Materialverdrängung aus dem Zwischenraum zwischen der zuletzt gebildeten Schicht und dem Wannenboden kommt, damit es zu keiner unakzeptablen Verdrängung von Material kommt, auf dem bereits Farbe aufgebracht ist. Daher sollte die Schicht aus photopolymerisierbaren Material auf dem Wannenboden schon vor der Einfärbung möglichst genau die Dicke der auszuhärtenden Schicht haben, so dass kein photopolymerisierbares Material nach der Farbaufbringung verdrängt werden muss und der restliche Anteil des photopolymerisierbaren Materials in der Wanne nicht durch verdrängte Farbstoffe verunreinigt wird. Um eine Schicht mit einer gewünschten Schichtdicke so zu definieren, kann eine Rakel oder ein Spin-Coating-Verfahren eingesetzt werden, wodurch eine Schicht mit genau der gewünschten Schichtdicke erzeugt wird.

Ein indirektes Folientransferverfahren kann in einer weiteren Ausführungsform auch dazu dienen, photopolymerisierbares Material und optional Farbe bereitzustellen. Hierbei wird zunächst ein dünner Film photopolymerisierbaren Materials auf die Folie aufgebracht, z.B. über ein Rakelsystem. Die Folie wird weiter transportiert und an einer Farbaufbringungsstation die Farbe auf der Oberfläche definiert und optional mittels einer Farbfixierstation fixiert. Anschließend kann die gefärbte Schicht photopolymerisierbaren Materials auf die Bauplattform oder die zuletzt daran ausgehärtete Schicht übertragen und durch Belichtung ausgehärtet werden.

Die Erfindung wird im Folgenden anhand eines Ausführungsbeispiels in den Zeichnungen erläutert, in denen:
Figuren 1 bis 4 Seitenansichten einer Vorrichtung zur Ausführung eines erfindungsgemäßen Verfahrens in aufeinanderfolgenden Verfahrensschritten zeigen,
Figuren 5 und 6 eine Vorrichtung zur Ausführung einer alternativen Verfahrensweise in Draufsicht von oben und in Seitenansicht zeigen,
Fig. 7 eine seitliche Schnittansicht auf eine Vorrichtung zur Ausführung einer weiteren alternativen Verfahrensweise zeigt und
Figuren 8 und 9 Seitenansichten der Vorrichtung aus Fig. 7 zeigen.

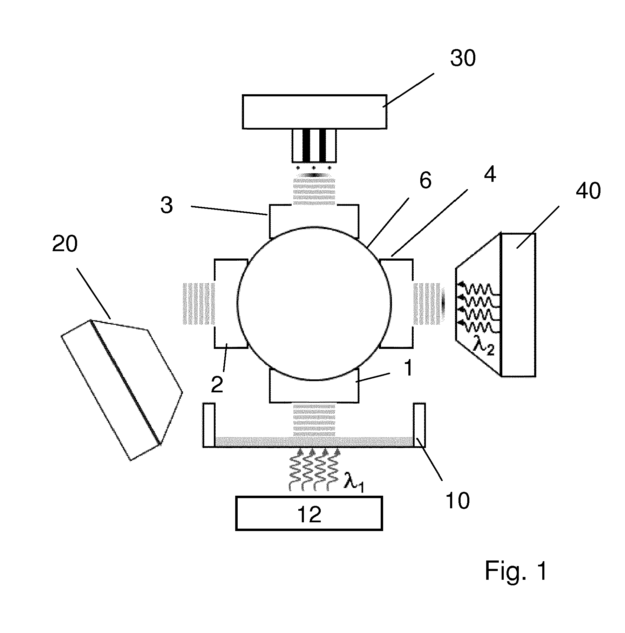

Es wird zunächst die Verfahrensweise zum sukzessiven Aufbau des Formkörpers beschrieben, bevor auf die weiteren Schritte im Zusammenhang mit der vorliegenden Erfindung eingegangen wird. Die in Fig. 1 dargestellte Vorrichtung weist eine Wanne 10 auf, deren Wannenboden zumindest in einem Teilbereich durchsichtig oder durchlässig für Licht einer Wellenlänge λ₁ ist. Dieser Teilbereich des Wannenbodens überdeckt zumindest die Ausdehnung der Fokusebene einer Belichtungseinheit 12, die unter dem Wannenboden angeordnet ist. Die Belichtungseinheit 12 weist eine Lichtquelle und einen Lichtmodulator auf, mit dem die Intensität gesteuert von einer Steuereinheit ortsselektiv eingestellt wird, um ein Belichtungsfeld mit der für die momentan zu bildende Schicht gewünschten Geometrie an dem Wannenboden zu erzeugen. Alternativ kann in der Belichtungseinheit auch ein Laser verwendet werden, dessen Lichtstrahl über einen beweglichen Spiegel, der von einer Steuereinheit gesteuert wird, oder einen xy-Laserplotter das Belichtungsfeld mit dem gewünschten Intensitätsmuster sukzessive abtastet.

Der Belichtungseinheit 12 gegenüber ist über der Wanne 10 eine Bauplattform 1 vorgesehen, die von einem nicht dargestellten Hubmechanismus getragen wird, so dass sie in höhenverstellbarer Weise über dem Boden der Wanne 10 im Bereich der Belichtungseinheit 12 gehalten wird.

In der Wanne 10 befindet sich eine Füllung aus hochviskosem photopolymerisierbarem Material. Der Materialspiegel der Füllung sollte nur geringfügig höher als die gewünschte Dicke der zu definierenden Schicht sein. Zur Definition einer Schicht aus photopolymerisierbarem Material wird in folgender Weise vorgegangen. Die Bauplattform 1 wird durch den Hubmechanismus in gesteuerter Weise abgesenkt, so dass (vor dem ersten Belichtungsschritt) ihre Unterseite in die Füllung des photopolymerisierbarem Materials eintaucht und sich dem Wannenboden soweit nähert, dass zwischen der Unterseite der Bauplattform 1 und dem Wannenboden genau die gewünschte Schichtdicke verbleibt. Nach Einstellung der Schichtdicke folgt die für diese Schicht gewünschte ortsselektive Belichtung durch die Belichtungseinheit 12, um sie in der gewünschten Form auszuhärten. Nach der Bildung der Schicht wird die Bauplattform 1 mittels des Hubmechanismus durch Anheben derselben oder auch durch Absenken der Wanne 10 wieder von der Wanne 10 getrennt. Anschließend wird photopolymerisierbares Material in den belichteten Bereich nachgeführt, um wieder eine Schicht aus photopolymerisierbarem Material zu bilden, die nur geringfügig dicker als die für die nächst zu bildende Schicht gewünschte Schichtdicke ist. Eine solche Verteilung kann zum Beispiel durch eine Rakel oder durch ein sogenanntes Spin-Coating-Verfahren erfolgen, bei dem eine vorgegebene Materialmenge in der Mitte der Wanne 10 aufgebracht wird und die Bauplattform dann in Rotation versetzt wird, um das photopolymerisierbare Material zu einer Schicht in der gewünschten Dicke auseinanderzuziehen. Das zugeführte Material stellt die Basisfarbe der entsprechenden Schicht dar. Dieses kann über den Bauprozess variiert werden.

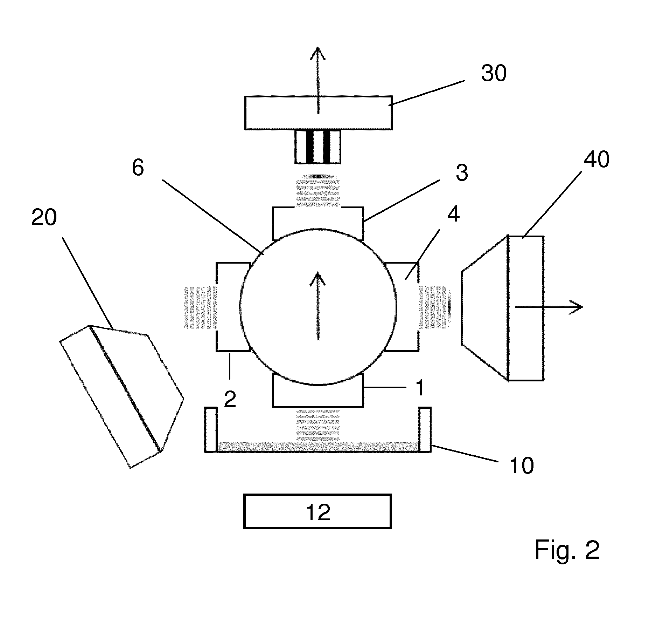

In Figur 2 ist durch den geradlinigen Pfeil das Anheben der Bauplattform nach dem Aushärten einer aktuellen Schicht angedeutet.

Diese Schritte werden nachfolgend mehrfach wiederholt, wobei dann jeweils der Abstand zwischen der Unterseite der zuletzt gebildeten Schicht zum Wannenboden auf die gewünschte Schichtdicke eingestellt wird und daraufhin die nächste Schicht in der gewünschten Weise ortsselektiv ausgehärtet wird.

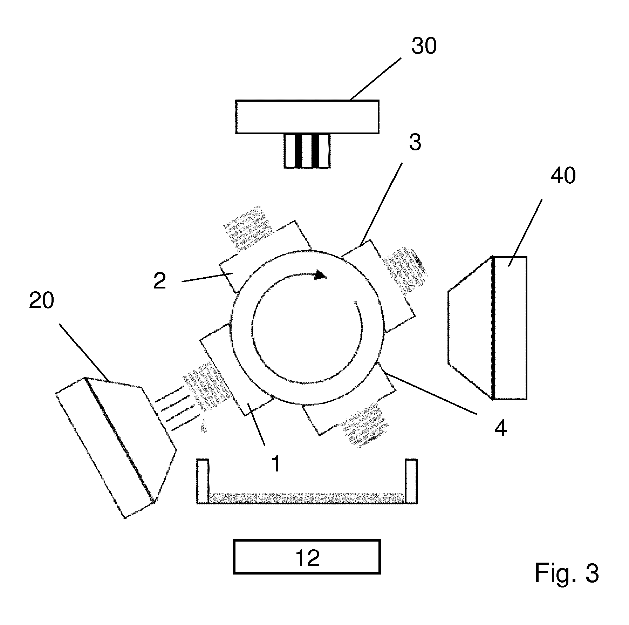

Bei dem vorliegenden erfindungsgemäßen Verfahren finden allerdings zwischen den Belichtungsschritten aufeinanderfolgender Schichten an der Bauplattform 1 weitere Zwischenschritte statt. Zu diesem Zweck ist die Bauplattform 1 um eine horizontale Achse drehbar an einem Träger 6 aufgehängt. In dem dargestellten Ausführungsbeispiel steht die Drehachse des Trägers 6 senkrecht zur Figurenebene. Um den Träger 6 herum sind weitere Bearbeitungsstationen angeordnet, und zwar eine Reinigungsstation 20, eine Farbaufbringungsstation 30 und eine Farbfixierstation 40. Die Bauplattform 1 wird den genannten Bearbeitungsstationen nacheinander zugeführt. Dabei wird die Bauplattform 1 mit dem daran bereits gebildeten Teil des Formkörpers zunächst durch Drehung des Trägers 6 zu einer Reinigungsstation 20 befördert, in der anhaftende Reste von unpolymerisiertem Material, das nicht ausgehärtet worden ist, entfernt werden. Dies kann zum Beispiel mechanisch durch Abstreifen oder vorzugsweise kontaktlos durch Abblasen oder Absaugen geschehen. Dieser Bearbeitungsschritt ist in Fig. 3 gezeigt.

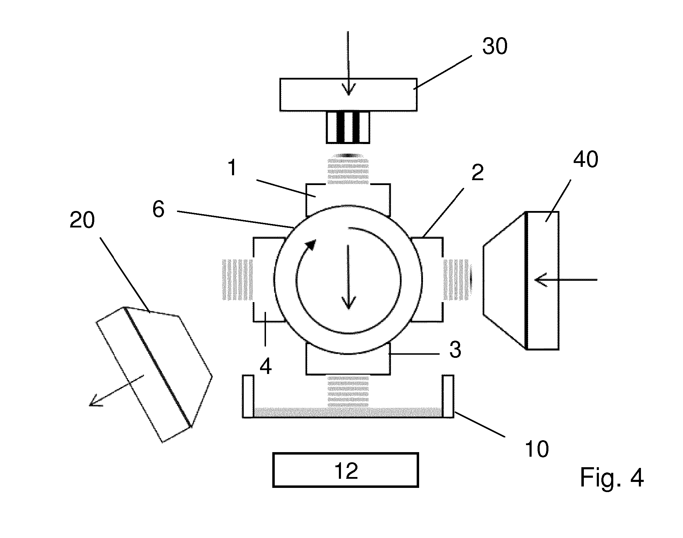

Nach der Reinigung wird die Bauplattform 1 weiter zu der Farbaufbringungsstation 30 gedreht, in der wie in Fig. 4 gezeigt ortsselektiv Farbe auf die zuletzt gebildete Schicht aufgebracht wird. Dies kann zum Beispiel durch ein Tintenstrahldruckverfahren erfolgen, bei dem eine Suspension von Farbpartikeln in Monomermaterial in dem gewünschten Muster aufgebracht wird. Daraufhin wird die Bauplattform 1 weiter zu der Farbfixierstation 40 gedreht, in der die aufgebrachte Farbe fixiert wird. Falls die Farbe in Form einer Suspension in photopolymerisierbarem Material aufgebracht wird, kann die Aushärtung durch Belichtung erfolgen. In alternativen Ausführungsformen kann die Farbe auch als Lösung aufgebracht werden, die in der Farbfixierstation 40 einer Wärmebehandlung unterzogen wird, um das Lösungsmittel zum Verdampfen zu bringen. Grundsätzlich sind alle Vorrichtungen zur Deponierung der farbgebenden Komponenten in flüssiger oder fester Form anwendbar, wie z.B. auch Tampondruck im Falle des Folientransferverfahrens zur Bereitstellung der Farbe und Aufnahme durch die Plattform bzw. Bauteiloberfläche.

Danach wird die Bauplattform 1 wieder in die in Fig. 1 gezeigte Stellung gedreht, in der eine neue Schicht aus photopolymerisierbarem Material zwischen der zuletzt gebildeten Schicht und dem Wannenboden definiert wird. Danach beginnt der beschriebene Zyklus von vorne und wird solange wiederholt, bis der sukzessive gebildete Formkörper die endgültig gewünschte Form erreicht hat.

In dem dargestellten Ausführungsbeispiel sind an dem Träger 6 drei weitere Bauplattformen 2, 3 und 4 aufgehängt. In dem Ausführungsbeispiel sind die Bauplattformen 1 - 4 jeweils um 90° zueinander um den Träger 6 versetzt angeordnet. Diese Ausführungsform ermöglicht es, dass an den Bauplattformen 1 - 4 Bearbeitungsschritte parallel durchgeführt werden. In der in Fig. 1 gezeigten Stellung wird an der Bauplattform 1 eine Schicht mit der gewünschten Dicke zwischen der zuletzt gebildeten Schicht und dem Wannenboden definiert und erfolgt deren Aushärtung durch Belichten mit Licht der Wellenlänge λ₁. Parallel dazu wird in der Farbaufbringungsstation 30 auf die zuletzt gebildete Schicht des an der Bauplattform 3 entstehenden Formkörpers Farbe aufgebracht. Parallel dazu wird die zuvor aufgebrachte Farbe auf der letzten Schicht des an der Bauplattform 4 entstehenden Formkörpers in der Farbfixierstation 40 durch eine weitere Belichtung mit der Wellenlänge λ₂ ausgehärtet oder fixiert. In diesem Ausführungsbeispiel finden also drei sukzessive Bearbeitungsschritte an drei der Bauplattformen gleichzeitig statt. In dem dargestellten Ausführungsbeispiel ist die Reinigungsstation nicht um 90° gegenüber der Wanne 10 versetzt, so dass der in Fig. 3 gezeigte Reinigungsschritt zum Entfernen von anhaftendem, unausgehärtetem Material als gesonderter Arbeitsschritt stattfindet. Grundsätzlich könnte die Reinigungsstation 20 allerdings auch um 90° gegenüber dem Wannenboden gedreht angeordnet sein, so dass dann die einzelnen Bearbeitungsschritte an den Bauplattformen 1 - 4 gleichzeitig oder parallel zueinander durchgeführt werden könnten.

Die Wanne 10 und die Bearbeitungsstationen 20, 30 und 40 sind in der Figurenebene in gesteuerter Weise verschiebbar relativ zu den Bauplattformen, so dass sie ihre Bearbeitungsstellung jeweils an das Stadium des Aufbauvorgangs der jeweils an den Bauplattformen 1 - 4 entstehenden Formkörper anpassen können.

In dem dargestellten Ausführungsbeispiel ist der Träger 6 der Bauplattformen 1 - 4 um eine horizontale (senkrecht zur Figurenebenestehende) Achse drehbar aufgehängt, so dass eine revolverartige Anordnung gegeben ist.

In dem dargestellten Ausführungsbeispiel wird jede an einer Bauplattform durch Aushärten neu gebildete Schicht durch Farbaufbringung in der Farbaufbringungsstation 30 in der gewünschten Weise bedruckt. Allerdings muss nicht jede Schicht an dem entstehenden Formkörper bedruckt werden, sondern können auch einzelne oder mehrere Schichten ohne Farbaufbringung gebildet werden.

Die Farbaufbringung kann auch zu einem weiteren Zweck eingesetzt werden, und zwar wenn der zu bildende Formkörper Überhänge aufweist. Als Überhang wird hier die Situation bezeichnet, in der eine momentan zu bildende Schicht in wenigstens einer Richtung über die darunterliegende ausgehärtete Schicht vorsteht. In diesem Fall kann die zuletzt definierte Schicht in den Bereichen, wo Überhänge der nächsten zu bildenden Schicht entstehen werden, in diesen Bereichen so bedruckt werden, dass diese Bereiche abgedeckt werden und so bei der Belichtung der nächsten zu bildenden, überstehenden Schicht im Bereich der Überhänge keine Polymerisierung der dahinterliegenden zuletzt gebildeten Schicht stattfinden kann, da sie durch die aufgebrachte Farbe abgedeckt ist.

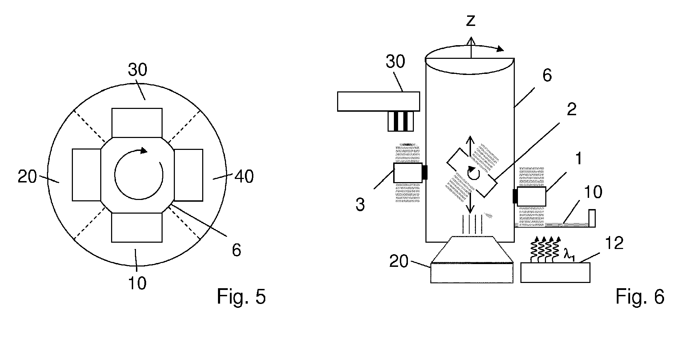

Fig. 5 zeigt eine Draufsicht von oben auf eine zur Ausführung einer alternativen Verfahrensweise geeignete Vorrichtung. Die Vorrichtung hat einen um eine vertikale Drehachse drehbar aufgehängten zentralen Träger 6, an dem in 90° Abständen vier Bauplattformen aufgehängt sind (die Drehachse steht senkrecht zu Figurenebene). Unter den Bauplattformen befinden sich ebenfalls in 90° Abstand die vier Bearbeitungsstationen, nämlich Wanne 10 zur Schichtdefinition einer zu polymerisierenden Schicht aus photopolymerisierbarem Material und zur Belichtung und Aushärtung der so definierten weiteren Schicht, Reinigungsstation 20, Farbaufbringungsstation 30 und Farbfixierstation 40.

Fig. 6 zeigt eine seitliche Ansicht auf die Vorrichtung aus Fig. 5. Die Bauplattformen sind an einem drehbaren zentralen Träger 6 aufgehängt, der um eine vertikale Z-Achse drehbar ist, um die Bauplattformen durch Drehung des zentralen Trägers 6 von einer Bearbeitungsstation zur nächsten zu bewegen. In dieser Ausführungsform können die Bauplattformen zusätzlich um eine horizontale, senkrecht zur Z-Achse stehende Achse drehbar an dem zentralen Träger 6 aufgehängt sein. Diese Ausführungsform ermöglicht es, jeweils zwei Formkörper auf beiden Seiten jeder Bauplattform aufzubauen, so dass insgesamt 8 Bauplattformenoberfächen vorhanden sind, wobei jeweils vier davon nach unten und vier nach oben weisen.

In dieser Ausführungsform können die Bauplattformen nach einem Bearbeitungsschritt um 180° um die genannte horizontale Achse am Träger 6 gedreht werden, so dass eine Bearbeitung von oben und unten erfolgen kann. Diese Ausführungsform kann zum Beispiel in der Reinigungsstation 20 vorteilhaft sein, da so das Abfließen von überschüssigen, nicht ausgehärtetem Material durch die Schwerkraft unterstützt werden kann.

In der in Fig. 6 dargestellten Ausführungsform erfolgt das Belichten mit der Belichtungseinheit 12 von unten durch den Wannenboden der Wanne 10. Anschließend wird der Träger 6 um 90° zu der Reinigungsstation 20 gedreht. In der Reinigungsstation wird während des Belichtungsschrittes der Bauplattform 1 eine Bauplattform 2 gereinigt, wobei diese dabei um die senkrecht zur Z-Achse stehende horizontale Achse gedreht wird, um das Abfließen von über polymerisierbarem Material zu erleichtern. Währenddessen wird die Bauplattform 3 von oben in der Farbaufbringungsstation 30 bedruckt. Natürlich kann grundsätzlich das Drucken auch von unten erfolgen. Es muss für die konkrete Ausführungsform dann die Steuerung so eingestellt werden, dass die Bauplattform in der richtigen Orientierung zu der jeweiligen Bearbeitungsstation gestellt wird.

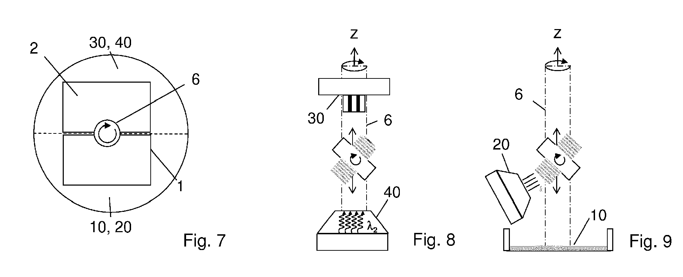

In den Fig. 7 bis 9 ist eine alternative Ausführungsform für eine zur Ausführung eines erfindungsgemäßen Verfahrens geeignete Vorrichtung gezeigt. Fig. 7 zeigt die Vorrichtung wiederum in der Draufsicht von oben, während in Fig. 8 und 9 schematische Seitenansichten gezeigt sind. Diese Ausführungsform unterscheidet sich von den vorhergehenden dadurch, dass die Belichtungsstation mit der Wanne 10 und die Reinigungsstation 20 räumlich zusammengefasst sind. Ebenso ist die Farbaufbringungsstation 30 räumlich mit der Farbfixierstation 40 zusammengefasst. Wie in Fig. 7 gezeigt, sind an dem zentralen Träger 6 zwei Bauplattformen 1, 2 diametral gegenüberliegend angeordnet. Die Bauplattform 1 befindet sich im Bereich der Belichtungsstation 10 und der Reinigungsstation 20, während sich die Bauplattform 2 im Bereich der Farbaufbringungsstation 30 und der Farbfixierstation 40 befindet. Fig. 8 zeigt die Vorrichtung im Bereich der Farbaufbringungsstation 30 und der Farbfixierstation 40 in Draufsicht. Die dargestellte Bauplattform ist an dem zentralen Träger 6 um eine zur Z-Achse senkrechte, horizontale Achse drehbar aufgehängt. Dadurch kann zunächst eine Seite der Bauplattform der Farbaufbringungsstation 30 zugewandt liegen und die Farbe auf die oberste Schicht des Formkörpers auf dieser Seite der Bauplattform aufgebracht werden. Nach der Farbaufbringung kann die Bauplattform um 180° gedreht werden, so dass die Schicht, auf die gerade Farbe aufgebracht worden ist, dann nach unten auf die Farbfixierstation 40 zu gerichtet ist, so dass die aufgebrachte Farbe zum Beispiel durch Belichtung ausgehärtet werden kann.

In Fig. 9 ist die Vorrichtung im Bereich der Wanne 10 und der Reinigungsstation 20 gezeigt. Nachdem eine Schicht über dem Wannenboden durch Belichtung von unten an dem Formkörper ausgehärtet worden ist, wird die Bauplattform angehoben und um die horizontale Achse gedreht, so dass sie auf die Reinigungsstation 20 zu gerichtet ist. Nach der Reinigung wird dann der Träger 6 wieder um 180° gedreht, so dass nach dem Reinigungsschrift nun die Farbaufbringung und Aushärtung in der Farbaufbringungsstation 30 und Farbfixierstation 40 erfolgen können.

Neben den zuvor beschriebenen Ausführungsformen, in denen die Bauplattformen durch Drehung der an einem zentralen Träger aufgehängten Bauplattformen von Bearbeitungsstation zu Bearbeitungsstation durch Drehen des Trägers 6 verfahren werden kann auch eine einfache linear bewegliche Aufhängung einer Bauplattform vorgesehen sein. Die Bauplattform wird dann entlang einer horizontalen Achse linear von Bearbeitungsstation zu Bearbeitungsstation bewegt, wobei die Bearbeitungsstationen entlang einer horizontalen Achse hintereinander liegend angeordnet sind.

In den beschriebenen bevorzugten Ausführungsformen erfolgt die Belichtung von unten und ist die Bauplattform vertikal beweglich, um Schicht auf Schicht unter der Bauplattform aufzubauen. Die vorliegende Erfindung ist aber natürlich auch bei Belichtung von oben anwendbar. Ebenso kann das Bedrucken je nach Ausführungsform von oben oder von unten erfolgen. Das Fixieren der Farbe kann durch Belichtung bei Verwendung von polymerisierbarer Farbe erfolgten oder durch Verdampfung von Lösungsmittel bei Verwendung von in Lösungsmittel gelöster Farbe.

## Patentansprüche

1. Verfahren zum Aufbau eines Formkörpers aus photopolymerisierbaren Material unter Anwendung einer lithographiebasierten generativen Fertigung (Rapid Prototyping), bei dem an einer Bauplattform (1, 2, 3, 4) eine Schicht aus flüssigem, photopolymerisierbarem Material definiert wird, die Schicht in einem Belichtungsgebiet mit vorgegebener Kontur durch Belichten polymerisiert wird, an der polymerisierten Schicht einer weitere Schicht aus photopolymerisierbaren Material definiert wird, die zuletzt definierte Schicht in einem Belichtungsgebiet mit für die zuletzt definierte Schicht vorgegebener Kontur durch Belichten polymerisiert wird, und die letzten beiden Schritte wiederholt werden, bis durch die Abfolge von ausgehärteten Schichten mit schichtweise vorgegebenen Konturen ein Formkörper mit vorgegebener Form gebildet ist, **dadurch gekennzeichnet, dass** auf mindestens eine Schicht Farbe innerhalb der vorgegebenen Kontur aufgebracht wird.

2. Verfahren zum Aufbau eines Formkörpers nach Anspruch 1, **dadurch gekennzeichnet, dass** das Aufbringen der Farbe mit variierenden Farben mit vorgegebener Ortsabhängigkeit innerhalb der vorgegebenen Kontur erfolgt.

3. Verfahren zum Aufbau eines Formkörpers nach einem der vorhergehenden Ansprüche, **dadurch gekennzeichnet, dass** das Aufbringen der Farbe auf eine Schicht nach deren Polymerisierung und vor dem Aufbringen einer weiteren Schicht erfolgt.

4. Verfahren zum Aufbau eines Formkörpers nach einem der vorhergehenden Ansprüche, **dadurch gekennzeichnet, dass** das Aufbringen der Farbe durch einen Farbdrucker direkt auf die Schicht erfolgt.

5. Verfahren nach Anspruch 1, 2 oder 3, **dadurch gekennzeichnet, dass** das Aufbringen der Farbe indirekt durch ein Folientransferverfahren erfolgt, bei dem die Farbe zunächst ortsselektiv auf eine Folie aufgebracht und von dort auf die zu färbende Schicht übertragen wird.

6. Verfahren nach einem der vorhergehenden Ansprüche, **dadurch gekennzeichnet, dass** das photopolymerisierbare Material an der Unterseite der Bauplattform durch Belichten von unten durch einen durchsichtigen Wannenboden polymerisiert wird, dass die Bauplattform relativ zu dem Wannenboden nach jedem Belichtungsschritt angehoben wird und dass photopolymerisierbares Material zur Definition einer weiteren Schicht nachgeführt wird.

7. Verfahren zum Aufbau eines Formkörpers nach Anspruch 6, **dadurch gekennzeichnet, dass** nach Nachführung von photopolymerisierbarem Materialdie Bauplattform, falls vorhanden mit den daran gebildeten Schichten, wieder in das nachgefüllte photopolymerisierbare Material abgesenkt wird, so dass durch Einstellung des Abstands der zuletzt ausgehärteten Schicht über dem Wannenboden eine Schicht aus photopolymerisierbarem Material mit vorgegebener Dicke definiert wird.

8. Verfahren zum Aufbau eines Formkörpers nach einem der vorhergehenden Ansprüche, **dadurch gekennzeichnet, dass** die Bauplattform verfahrbar aufgehängt ist und dass die Bauplattform nach der Polymerisierung einer Schicht durch Verfahren zu einer Farbaufbringungsstation (30) geführt wird, in der ortsselektiv Farbe auf die zuletzt gebildete Schicht aufgebracht wird, wonach die Bauplattform wieder zum Aufbringen einer weitern Schicht aus photopolymerisierbarem Material verfahren wird.

9. Verfahren zum Aufbau eines Formkörpers nach einem der vorhergehenden Ansprüche, **dadurch gekennzeichnet**, dassdie Bauplattform verfahrbar aufgehängt ist und die Bauplattform nach der Polymerisierung einer Schicht durch Verfahren zunächst zu einer Reinigungsstation (20) geführt wird, in der überschüssiges photopolymerisierbares Material, das in dem letzten Belichtungsschritt nicht ausgehärtet worden ist, entfernt wird, bevor sie zur Farbaufbringungsstation (30) verfahren wird.

10. Verfahren zum Aufbau eines Formkörpers nach Anspruch 8 oder 9, **dadurch gekennzeichnet, dass** die Bauplattform nach der Farbaufbringung in der Farbaufbringungsstation (30) zu einer Farbfixierstation (40) überführt wird, in der die aufgebrachte Farbe durch Verfestigung fixiert wird, bevor die Bauplattform wieder zur Wanne (10) hin verfahren wird, wo eine weitere Schicht von photopolymerisierbarem Material definiert wird.

11. Verfahren nach einem der Ansprüche 8 bis 10, **dadurch gekennzeichnet, dass** das Verfahren der Bauplattform durch Drehen eines die Bauplattform haltenden Trägers (6) um eine horizontale oder vertikale Drehachse erfolgt.

12. Verfahren nach einem der Ansprüche 8 bis 11, **dadurch gekennzeichnet, dass** Verfahren der Bauplattform zwischen zwei Bearbeitungsstationen durch Drehen des die Bauplattform haltenden Trägers (6) um dessen vertikale Drehachse erfolgt und das Verfahren zwischen zwei anderen Bearbeitungsstationen durch Drehen der Bauplattform um eine Aufhängung am Träger (6) mit einer zur vertikalen Drehachse des Trägers (6) senkrechten, horizontalen Drehachse um 180° erfolgt, so dass aufeinanderfolgend eine Bearbeitung mit Orientierung nach unten und nach oben erfolgt.

13. Verfahren nach Anspruch 12, **dadurch gekennzeichnet, dass** auf beiden gegenüberliegenden Oberflächen der Bauplattform jeweils ein Formkörper aufgebaut wird und dass die Bearbeitung der beiden Formkörper von unten und oben gleichzeitig erfolgt.

14. Verfahren nach einem der Ansprüche 11 bis 13, **dadurch gekennzeichnet, dass** eine weitere Bauplattform drehbar zusammen mit der ersten Bauplattform so aufgehängt ist, dass sich die weitere Bauplattform in der Reinigungs- oder Farbaufbringungsstation befindet, wenn die erste Bauplattform sich in einer Station zur Definition einer weiteren Schicht befindet.

15. Verfahren nach einem der Ansprüche 11 bis 14, **dadurch gekennzeichnet, dass** mehrere Bauplattformen um die Drehachse verteilt an einem Träger (6) so aufgehängt sind, dass, wenn sich eine erste Bauplattform (1) zur Polymerisation einer weiteren Schichtgegenüber einer Belichtungseinheit befindet, eine zweite Bauplattform (2) sich in der Reinigungsstation (20) befindet, eine dritte Bauplattform (3) sich in der Farbaufbringungsstation (30) befindet und eine vierte Bauplattform (4) sich in der Farbfixierstation (40) befindet.

16. Verfahren nach Anspruch 15, **dadurch gekennzeichnet, dass** die Bearbeitung der vier entstehenden Formkörper an den vier Bauplattformen zeitlich parallel durch Belichtung, durch Reinigung in der Reinigungsstation (20), durch Farbaufbringung in der Farbaufbringungsstation (30) und durch Farbaushärtung in der Farbfixierstation (40) erfolgt.

17. Verfahren nach einem der vorhergehenden Ansprüche, **dadurch gekennzeichnet, dass** im Bereich von Überhängen, wo die aktuell auszuhärtende Schicht seitlich über die zuletzt gebildete Schicht vorsteht, der überstehende Bereich durch im Belichtungswellenlängenbereich absorbierendes Material abgedeckt wird, um Polymerisationen hinter der aktuell auszuhärtenden Schicht zu vermeiden.

18. Verfahren nach einem der vorhergehenden Ansprüche, **dadurch gekennzeichnet, dass** das photopolymerisierbare Material vor dem Belichten einer weiteren Schicht auf eine gewünschte Höhe über dem Wannenboden gebracht wird, indem die gewünschte Schichtdicke durch eine Rakel oder durch ein Spin-Coating-Verfahren eingestellt wird, so dass keine merkliche Materialverdrängung beim Absenken der Bauplattform zum Wannenboden zur Definition der auszuhärtenden Schicht auftritt.

19. Verfahren nach einem der Ansprüche 1 bis 6, **dadurch gekennzeichnet, dass** zum Aufbringen einer weiteren Schicht aus photopolymerisierbarem Material auf die Bauplattform oder die zuletzt daran ausgehärtete Schicht ein indirektes Folientransferverfahren angewendet wird, bei dem eine Schicht aus photopolymerisierbaren Material in der gewünschten Dicke auf einer Folie definiert und die Folie weiter transportiert wird, um die darauf definierte Schicht auf die Bauplattform oder die zuletzt daran ausgehärtete Schicht zu übertragen und durch Belichtung auszuhärten.
